# EUROPÄISCHE PATENTSCHRIFT

(11) **EP 1 470 022 B1**
(45) Veröffentlichungstag und Bekanntmachung des Hinweises auf die Patenterteilung: **02.09.2009**
(21) Anmeldenummer: 03709689.8
(22) Anmeldetag: 17.01.2003
(51) Int. Cl.: B60N 2/427, B60N 2/68, B60R 22/26

(54) **FAHRZEUGSITZ**
VEHICLE SEAT
SIEGE DE VEHICULE

(30) Priorität: 02.02.2002 DE 10204272
(43) Veröffentlichungstag der Anmeldung: 27.10.2004
(73) Patentinhaber: Daimler AG, 70327 Stuttgart (DE)
(72) Erfinder: GAUB, Martin, 89335 Ichenhausen (DE); HILSCHER, Alexander, 89231 Neu-Ulm (DE); KRAISS, Stefan, 89231 Neu-Ulm (DE); MAIER, Andreas, 88480 Achstetten (DE); MÄUSLE, Rainer, 89356 Haldenwang (DE); STADLMAYR, Ulrike, 89435 Finningen (DE); WACHTER, Gerhard, 89231 Neu-Ulm (DE)
(74) Vertreter: JENSEN & SON
(86) Internationale Anmeldenummer: PCT/EP2003/000438
(87) Internationale Veröffentlichungsnummer: WO 2003/066372

(56) Entgegenhaltungen:
- EP-A- 1 046 540
- DE-A- 4 330 011
- DE-C- 19 907 670
- US-A- 4 040 660
- US-A- 4 749 231
- US-A- 5 108 151

## Beschreibung

Die Erfindung betrifft einen Fahrzeugsitz mit einem Sitzkissen und einer Sitzlehne gemäß dem Oberbegriff des Patentanspruchs 1.

Aus der DE 43 30 011 A1 ist ein sogenannter Integralsitz bekannt, bei dem ein Dreipunkt-Sicherheitsgurt am Sitz angeordnet ist, wobei die Gurtrolle direkt am Rahmen, im oberen, seitlichen Bereich der Sitzlehne befestigt ist. Bei Einwirkung von dynamischen Kräften werden diese direkt in den Rahmen eingeleitet, so dass es dabei verstärkt zu Verformungen in dem Bereich des Rahmens kommen kann, in dem die Gurtrolle angeordnet ist. Die Anordnung des Sicherheitsgurtes ist von der späteren Einbaulage des Integralsitzes abhängig, so dass unterschiedliche Sitze für verschiedene Positionen im Fahrzeug vorgesehen werden müssen.

Ein gattungsgemäße Fahrzeugsitz ist aus der DE 199 07 670 C1 bekannt. Die Sitzlehne des zur Personenbeförderung vorgesehenen Fahrzeugsitzes umfasst einen u-förmigen Rohrrahmen, auf dem eine Holzplatte befestigt ist, wobei ein Plattenabschnitt der Holzplatte über den Rohrrahmen übersteht. Um bei Einwirkung von dynamischen Kräften in bestimmten Bereichen der Sitzlehne, insbesondere im Kopfbereich, Verformungsenergie aufzunehmen, ist ein Aufsatzträger auf dem überstehenden Plattenabschnitt befestigt. Der Aufsatzträger leistet im Crashfall einen zusätzlichen Beitrag zum Abbau von Beschleunigungskräften im Kopfbereich.

Bei dieser bekannten Sitzlehnenkonstruktion ist jedoch kein Gurt vorgesehen.

Es ist daher Aufgabe der Erfindung unter Beibehaltung des guten Verformungsverhaltens einen Fahrzeugsitz mit integriertem Sicherheitsgurt zu entwickeln, wobei die Montage des Fahrzeugsitzes kostengünstig sein soll.

Die Aufgabe wird erfindungsgemäß mit den Merkmalen des Patentanspruchs 1 gelöst.

Vorteile und Ausgestaltungen der Erfindung ergeben sich aus den Merkmalen der Unteransprüche.

Erfindungsgemäß ist ein Gurtvorrat einer in einen Fahrzeugsitz integrierten Sicherheitsgurtvorrichtung platzsparend in der Sitzlehne untergebracht. Damit eine optimale Energieaufnahme des Fahrzeugsitzes im angeschnallten Zustand des Insassen erreicht wird, ist der Gurtvorrat in einem Aufsatzträger der Sitzlehne gelagert. Somit werden die bei einem Aufprall wirkenden Zugkräfte des Gurtes zunächst vom Aufsatzträger aufgenommen. Das bietet die Möglichkeit, dass ein Teil der Energie durch den Aufsatzträger aufgenommen wird. Der Aufsatzträger ist auf einem über den Rohrrahmen überstehenden Plattenabschnitt einer Platte der Sitzlehne befestigt. Durch diese von der Ausbildung des Rohrrahmens unabhängige Anordnung kann der Aufsatzträger derart gestaltet werden, dass der Gurtvorrat unabhängig von der späteren Einbaulage des Sitzes entweder im oberen linken oder im oberen rechten Bereich untergebracht werden kann. Besonders gut eignet sich eine derartige Lösung für Fahrzeuge zur Personenbeförderung, zum Beispiel für Busse oder Bahnen, bei denen Fahrzeugsitze derart ausgelegt werden, dass sowohl ein von hinten auf den Sitz aufprallender Passagier weich abgefangen wird; gleichzeitig aber Zugkräfte für den Gurt gehalten werden.

Der Aufsatzträger kann über einen Hilfsrahmen an den Rohrrahmen der Sitzlehne angeschlossen werden. Damit wird erreicht, dass die bei einem Aufprall wirkenden Zugkräfte des Gurtes über mehrere Kraftpfade in den Rohrrahmen eingeleitet werden können, so dass die Kräfte gleichmäßig in der Sitzlehne verteilt werden.

In einer bevorzugten Ausführungsform ist vorgesehen, den Aufsatzträger so zu gestalten, dass der Gurtvorrat in einem der oberen Eckbereiche der Sitzlehne angeordnet ist. Das hat den Vorteil, dass im Schulterbereich des Insassen keine Umlenkungspunkte für die Führung des Gurtes notwendig sind, so dass der Gurt leichter von der Gurtrolle abgezogen werden kann und sich auch leichter aufwickeln lässt.

Bei einer spiegelsymmetrischen Ausbildung des Aufsatzträgers bezüglich der Mittelhochachse des Fahrzeugsitzes kann die Eignung des Fahrzeugsitzes für Fahrzeuge zur Personenbeförderung weiter erhöht werden. Wenn in den oberen Eckbereichen der Sitzlehne auch Griffanordnungen vorgesehen werden, kann der Aufsatzträger so ausgebildet sein, dass entweder die Griffanordnung oder der Gurtvorrat im Aufsatzträger untergebracht werden kann.

Der Aufsatzträger kann an seinen Längsseiten jeweils beidseitig einen Aufnahmebereich aufweisen, so dass die Möglichkeit besteht den Gurtvorrat wahlweise im rechten oder im linken Eckbereich der Sitzlehne unterzubringen. Damit kann der Fahrzeugsitz unabhängig von seiner Einbaulauge im Fahrzeug gefertigt werden.

Der Gurtvorrat kann ein Gehäuse umfassen, das an dem Aufsatzträger befestigt wird. Dadurch kann die Sicherheitsgurtvorrichtung vorgefertigt in den entsprechenden Aufnahmebereich eingesetzt werden.

Das Gehäuse kann mit einer Abdeckung verschlossen sein, in die eine Gurtführung integriert ist. Damit kann die Montage weiter vereinfacht werden.

In Einbaulage des Gurtvorrats kann der Aufnahmebereich des Aufsatzträgers durch eine Verkleidung sichtseitig abgedeckt werden, so dass ein hochwertiger Eindruck des Sitzes entsteht.

Für eine einfache Handhabung des Gurtes kann die Verkleidung mit einem Gurtzubringer versehen sein, der den Gurt bis zur Vorderseite des Sitzes leitet. Der Insasse kann damit den Gurt leichter erreichen.

Zum Halten der bei einem Aufprall wirkenden Zugkräfte des Gurtes sind entlang der Rahmenschenkel des u-förmigen Rohrrahmens Verstärkungen befestigt. Diese können wahlweise auf dem Rohrrahmen oder seitlich des Rohrrahmens an diesem angeschraubt oder angeschweißt sein.

Die Verstärkung kann sich mehrteilig aus einzelnen Abschnit-ten zusammensetzen, die so zusammenwirken, dass die Sitzlehne nur bis zu einem vorher definierten Maß verformbar ist.

Zur Begrenzung des Verformungsweges des Rohrrahmens kann mindestens ein Abschnitt der Verstärkung an seinem unteren Ende einen Anschlag aufweisen, der nach einer definierten Verformung des Rohrrahmens auf eine obere Kante des nachfolgenden Abschnitts stößt. Diese Funktionalität kann selbstverständlich auch umgekehrt realisiert werden, so dass ein oberer Anschlag auf ein Ende eines übergeordneten Abschnitts stößt.

Weitere Vorteile und bevorzugte Ausgestaltungsformen der Erfindung werden im folgenden anhand der Zeichnung erläutert. Dabei zeigen:
- Fig. 1: eine Explosionsdarstellung einer Sitzlehne mit integrierter Sicherheitsgurtvorrichtung,
- Fig. 2a: eine Seitenansicht eines Rohrrahmens in einer ersten Ausführungsform gemäß Fig. 1,

- Fig. 2b: eine Vorderansicht des Rohrrahmens gemäß Fig. 2a,
- Fig. 3a: eine Seitenansicht eines Rohrrahmens in einer zweiten Ausführungsform gemäß Fig. 1,
- Fig. 3b: eine Vorderansicht des Rohrrahmens gemäß Fig. 3a,
- Fig. 4: eine Rückansicht der Sitzlehne gemäß Fig. 1 sowie
- Fig. 5: eine Seitenansicht der Sitzlehne gemäß Fig. 1.

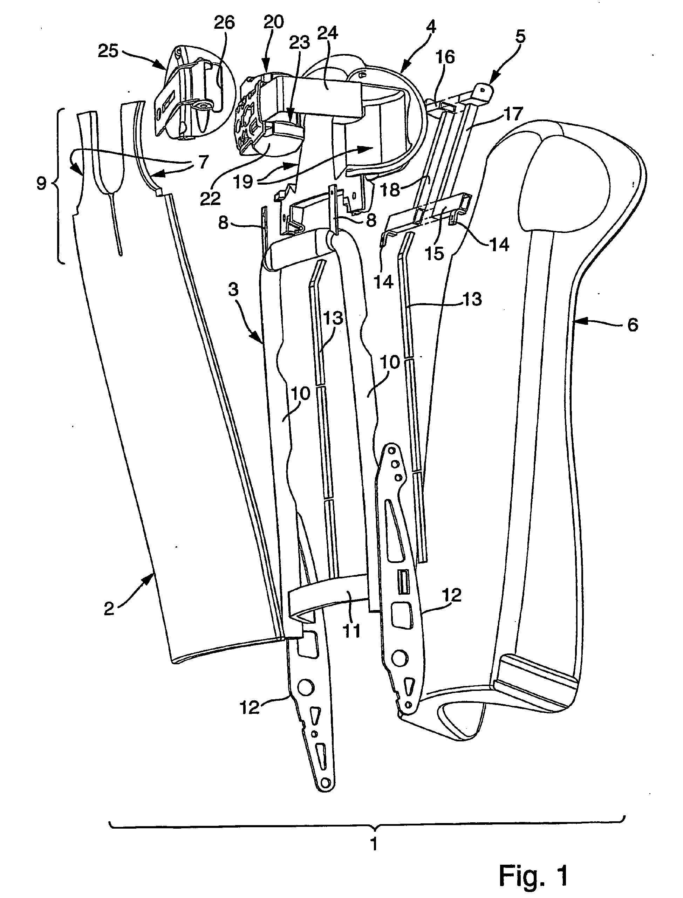

Fig. 1 zeigt eine Explosionsdarstellung einer Sitzlehne 1 für einen Fahrzeugsitz, wie er beispielsweise in einem Bus vorgesehen sein kann, in einer perspektivischen Ansicht. Die Sitzlehne 1 umfasst eine sich etwa über die gesamte Höhe oder nur über einen bestimmten Teil der Höhe der Sitzlehne 1 erstreckende Platte 2, einen Rohrrahmen 3, einen Aufsatzträger 4, einen Hilfsrahmen 5 sowie ein sitzgerecht geformtes Lehnenpolster 6.

Die Platte 2 ist vorzugsweise eine mehrlagig verleimte Holzplatte, die der Sitzlehne 1 zusammen mit dem Rohrrahmen 3 die entsprechende Steifigkeit verleiht. In ihrem oberen Bereich weist die Platte 2 an ihren Längsseiten beidseitig zwei kreisbogenförmige Aussparungen 7 auf.

Der Rohrrahmen 3 ist über Laschen 8 mit der Platte 2 verschraubt, wobei ein Plattenabschnitt 9 nach oben über den Rohrrahmen 3 freitragend hinaus ragt. Der u-förmig ausgebildete Rohrrahmen 3 ist aus einem Stück gebogen, wobei sich dessen Rahmenschenkel 10 bis zur Lehnenunterkante erstrecken, die über eine Querstrebe 11 miteinander verbunden sind. Jeder Rahmenschenkel 10 wird nach unten durch einen Hebel 12 verlängert, über den die Sitzlehne an das Untergestell des Fahrzeugsitzes angebunden ist.

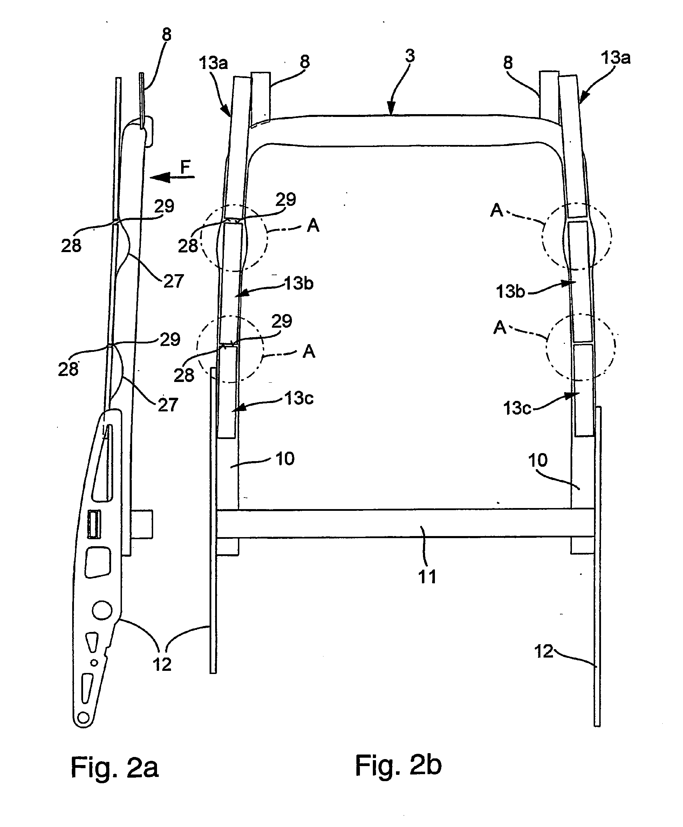

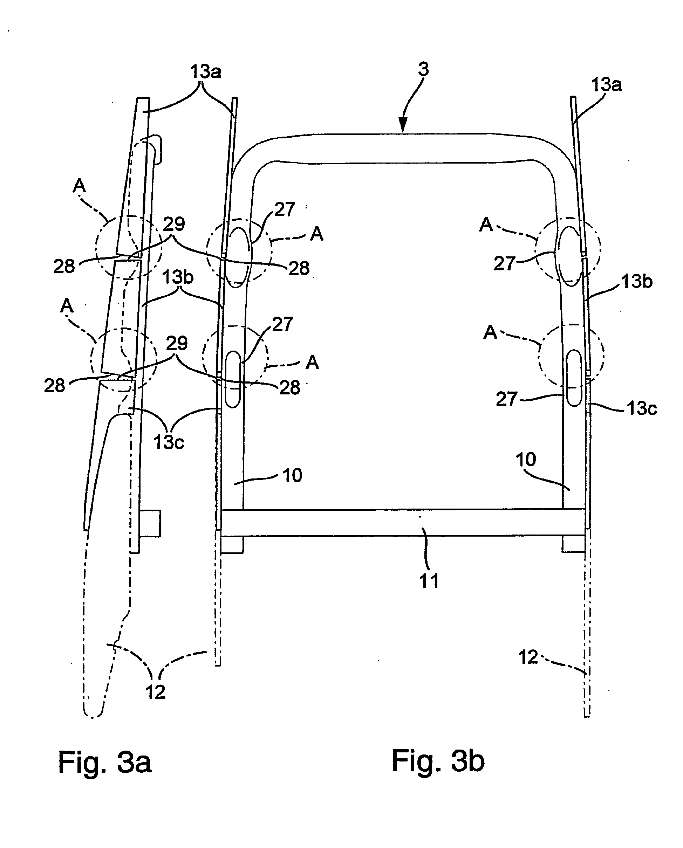

Der Rohrrahmen 3 ist mit Verstärkungen 13 versehen, die -wie aus den Fig. 2 und 3 hervorgeht- sowohl senkrecht als auch parallel zu der zu erwartenden Belastungsrichtung am Rohrrahmen 3 angebracht sein können.

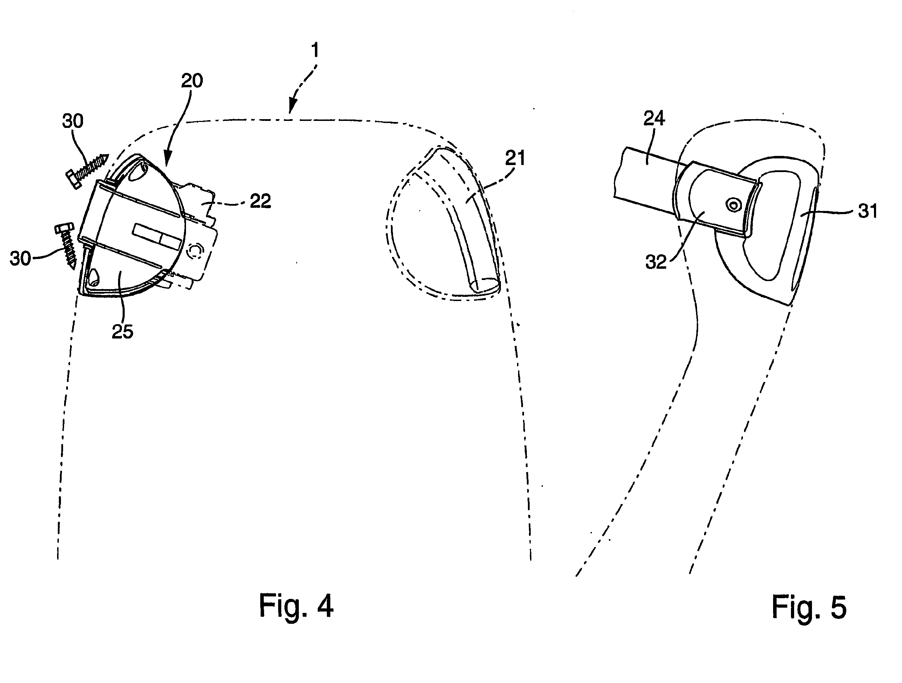

Der oberhalb des Rohrrahmens 3 angeordnete Aufsatzträger 4 wird zwischen dem Hilfsrahmen 5 und der Platte 2 angeordnet, wobei der Hilfsrahmen 5 mittels Winkel 14 am Rohrrahmen 3 befestigt ist. Der Hilfsrahmen 5 weist zwei Querprofile 15 und 16 auf, die mit Längsstreben 17 und 18 miteinander verbunden sind. Dieser Hilfsrahmen 5 kann auch bezüglich der Mittelhochachse des Sitzes 1 geteilt sein, was mit einer strichlierten Linie angedeutet ist. Der vorzugsweise aus Kunststoff gefertigte und bezüglich der Mittelhochachse des Fahrzeugsitzes spiegelsymmetrisch aufgebaute Aufsatzträger 4 ist mit seiner dem Lehnenpolster 6 zugewandten Seite der Kontur des Lehnenpolsters 6 angepasst, so dass er in Einbaulage an dieser anliegt. An seinen Längsseiten weist der Aufsatzträger 4 beidseitig jeweils einen Aufnahmebereich 19 auf, der wahlweise zur Aufnahme eines Gurtvorrats 20 oder einer -nur in Fig. 4 dargestellten- Griffanordnung 21 dient. Der Gurtvorrat 20 ist somit sowohl links als auch rechts in der Sitzlehne 1 einbaubar. Der in dem Aufnahmebereich 19 gelagerte Gurtvorrat 20 umfasst ein Gehäuse 22, eine Gurtrolle 23 sowie einen von der Gurtrolle 23 abziehbaren Gurt 24. Nach außen ist der Gurtvorrat mit einer Abdeckung 25 abgedeckt, die eine integrierte Gurtführung 26 aufweist, durch die der Gurt 24 seitlich am Sitzpolster 6 herum zum Insassen geführt wird.

Die Wirkungsweise der Verstärkungen 13 gemäß den Ausführungsformen nach Fig. 2 und 3 sind gleich, so dass die folgenden Ausführungen für beide Ausführungsformen gelten. Um die bei einem Aufprall wirkenden Kräfte des Sicherheitsgurtsystems im Rohrrahmen 3 aufzunehmen, können die Verstärkungen 13 gemäß den Fig. 2a und 2b auf bzw. gemäß den Fig. 3a und 3b an den Rohrrahmen 3 geschweißt oder geschraubt werden. Die Verstärkungen 13 sind mehrteilig aus Abschnitten 13 a bis c zusammengesetzt.

Fahrzeugsitze zur Personenbeförderung müssen aufgrund ihrer reihenweisen Anordnung im Fahrzeug, beispielsweise in einem Bus, sowohl Kräfte von einem von hinten auftreffenden Insassen aufnehmen, aber auch Kräfte die vom Insassen auf dem Fahrzeugsitz selbst auf die Sitzlehne wirken. Der Rohrrahmen 3 und die Verstärkungen 13 müssen also so aufeinander abgestimmt werden, dass die Energie des von hinten aufprallenden Insassen weich abgebaut werden kann, während die Belastungskräfte von dem Sicherheitsgurtsystem durch die Rahmenstruktur gehalten werden müssen. Dazu weist der Rohrrahmen 3 in den kreisförmig markierten Bereichen A Ausschnitte 27 auf, die sich bei Einwirkung von quer zum Rohrrahmen gemäß Pfeilrichtung F auftreffenden Kräften gezielt verformen können. Diese Verformungsbereiche gewährleisten den weichen Abbau von Energie. Weiterhin sind die auf bzw. an dem Rohrrahmen befestigten Abschnitte 13 a und 13b an ihren unteren Enden in den kreisförmig markierten Bereichen A mit vorzugsweise metallenen Anschlägen 28 (nicht näher dargestellt) ausgestattet, die nach Überwinden des weichen Verformungsweges durch den von hinten aufprallenden Insassen auf die obere Kante 29 des nachfolgenden Abschnitts 13b bzw. 13c auftrifft, so dass nunmehr die Zugkräfte des Gurtes gehalten werden können. Somit wird ein Verhalten des Sitzlehne 1 erreicht, das eine weiche Verformung in den Bereichen A solange zulässt, bis die Anschläge 28 auf die obere Kante 29 des nachfolgenden Abschnitts 13b bzw. 13 c trifft.

Wie aus Fig. 4 hervorgeht ist die Befestigung des Gurtvorrats 20 so ausgeführt, dass diese durch vorzugsweise zwei Schrauben 30 über das Gehäuse 22 an dem hier nicht sichtbaren Aufsatzträger 4 fixiert wird. Durch die Art der Anbindung kann sich das Gehäuse 22 an der Struktur der Sitzlehne1 abstützen, so dass die Kräfte an den Befestigungspunkten sich in mehrere Kraftrichtungen aufteilt. Dadurch kann die Dimensionierung kleiner und damit leichter und kostengünstiger dargestellt werden. Anstelle des Gurtvorrats 22 ist auf dessen gegenüberliegender Seite in den Aufnahmebereich 19 des Aufsatzträgers 4 die Griffanordnung 21 untergebracht. Aufgrund der Spiegelsymmetrie des Aufsatzträgers 4 kann die Gurtrolle sowohl links als auch rechts in der Sitzlehne 1 eingebaut werden, damit jeder Sitzplatz in dem Bus so ausgestattet ist, dass der Gurtvorrat 20, der den oberen Gurtpunkt eines 3-Punkt-Sicherheitsgurtes bildet, fensterseitig positioniert wird. Dadurch wird bei einem Kippen des Busses im Crashfall der Insasse im Gurt gehalten. Somit kann für jede Position im Fahrzeug der gleiche Fahrzeugsitz verwendet werden, wobei lediglich ein Austausch von Griffanordnung und Gurt erfolgen muss.

Fig. 5 zeigt in einer Seitenansicht der Sitzlehne 1, dass der Gurtvorrat 20 nach außen durch eine Verkleidung 31 abgedeckt ist, an die ein Gurtzubringer 32 angebracht ist. Der Gurtzubringer 32 führt den Gurt 24 aus der integrierten Gurtführung 26 der Abdeckung 25 (vgl. Fig. 1) nach vorn zum Sitzbereich des Insassen, so dass dieser den Gurt 24 bequem greifen kann. Um den Komfort weiter zu verbessern, kann der Gurtzubringer 32 schwenkbar an der Verkleidung 31 befestigt sein.

Durch die Anbindung des Gurtvorrats 22 im oberen Bereich der Sitzlehne entfallen Umlenkpunkte und somit Ursachen für den Rollwiderstand des Gurtes 24, so dass sich der Insasse leichter mit angelegtem Gurt 24 bewegen kann. Zudem kann sich durch den Wegfall von Umlenkpunkten der Gurt 24 leichter aufrollen.

Die Funktion der Sicherheitsgurtvorrichtung ist durch die beschriebene Positionierung des Gurtvorrates 20 auch bei neigungsverstellbaren Sitzlehnen eines Fahrzeugsitzes gewährleistet. Da der Gurt sich immer an derselben Position relativ zum Insassen befindet, ist die Zugkraft in jeder Sitzlehnenneigung gleich. Das Sperren des Gurts durch ungünstige Positionierung der Sitzlehne ist nahezu ausgeschlossen.

## Patentansprüche

1. Fahrzeugsitz mit einem Sitzkissen und einer Sitzlehne (1), bei der auf einem u-förmigen Rohrrahmen (3) eine Platte (2) befestigt ist, die mit mindestens einem Plattenabschnitt (9) über den Rohrrahmen übersteht, wobei auf dem überstehenden Plattenabschnitt ein der Kopfabstützung dienender Aufsatzträger (4) befestigt ist,
**dadurch gekennzeichnet, dass** eine Sicherheitsgurtvorrichtung mit ihrem Gurtvorrat (20) in den Fahrzeugsitz integriert ist, wobei der Gurtvorrat (20) in dem Aufsatzträger (4) gelagert ist.

2. Fahrzeugsitz nach Anspruch 1,
**dadurch gekennzeichnet, dass** der Aufsatzträger (4) über einen Hilfsrahmen (5) an den Rohrrahmen (3) angeschlossen ist.

3. Fahrzeugsitz nach einem der Ansprüche 1 oder 2,
**dadurch gekennzeichnet, dass** der Gurtvorrat (20) in einem der oberen Eckbereiche der Sitzlehne (1) angeordnet ist.

4. Fahrzeugsitz nach einem der Ansprüche 1 bis 3,
**dadurch gekennzeichnet, dass** der Aufsatzträger (4) bezüglich der Mittelhochachse des Fahrzeugsitzes spiegelsymmetrisch ausgebildet ist.

5. Fahrzeugsitz nach einem der Ansprüche 1 bis 4,
**dadurch gekennzeichnet, dass** der Aufsatzträger (4) an seinen Längsseiten jeweils beidseitig einen Aufnahmebereich (19) aufweist.

6. Fahrzeugsitz nach einem der Ansprüche 1 oder 3,
**dadurch gekennzeichnet, dass** der Gurtvorrat (20) ein Gehäuse (22) umfasst, das an dem Aufsatzträger (4) befestigt ist.

7. Fahrzeugsitz nach Anspruch 6,
**dadurch gekennzeichnet, dass** das Gehäuse (22) mit einer Abdeckung (25) verschlossen ist, in die eine Gurtführung (26) integriert ist.

8. Fahrzeugsitz nach einem der Ansprüche 6 oder 7,
**dadurch gekennzeichnet, dass** in Einbaulage des Gurtvorrats (20) der Aufnahmebereich (19) des Aufsatzträgers (4) durch eine Verkleidung (31) sichtseitig abgedeckt ist.

9. Fahrzeugsitz nach Anspruch 8,
**dadurch gekennzeichnet, dass** die Verkleidung (31) einen Gurtzubringer (32) umfasst.

10. Fahrzeugsitz nach einem der Ansprüche 1 bis 10,
**dadurch gekennzeichnet, dass** entlang von den Rohrrahmen (3) bildenden Rahmenschenkeln (10) Verstärkungen (13) befestigt sind.

11. Fahrzeugsitz nach Anspruch 10,
**dadurch gekennzeichnet, dass** sich die Verstärkungen (13) mehrteilig aus Abschnitten (13a, 13b, 13c) zusammensetzen.

12. Fahrzeugsitz nach Anspruch 11,
**dadurch gekennzeichnet, dass** mindestens ein Abschnitt (13a) an seinem unteren Einde einen Anschlag (28) aufweist, der mit einer oberen Kante (29) des nachfolgenden Abschnitts (13b) zusammenwirkt.

## Claims

1. Vehicle seat with a seat cushion and a seat back (1), wherein a plate (2) projecting with at least one plate section (9) beyond the tubular frame is attached to a U-shaped tubular frame (3), wherein a mounting support (4) for supporting the head is attached to the projecting plate section,
**characterised in that** a seat belt device is integrated into the vehicle seat with its belt store (20), the belt store (20) being bearing-mounted in the mounting support (4).

2. Vehicle seat according to claim 1,
**characterised in that** the mounting support (4) is joined to the tubular frame (3) by an auxiliary frame (5).

3. Vehicle seat according to claim 1 or 2,
**characterised in that** the belt store (20) is located in one of the upper corner regions of the seat back (1).

4. Vehicle seat according to any of claims 1 to 3,
**characterised in that** the mounting support (4) is mirror-symmetrical with respect to the central vertical axis of the vehicle seat.

5. Vehicle seat according to any of claims 1 to 4,
**characterised in that** the mounting support (4) has a location region (19) on each of its sides.

6. Vehicle seat according to claim 1 or 3,
**characterised in that** the belt store (20) includes a housing (22) secured to the mounting support (4).

7. Vehicle seat according to claim 6,
**characterised in that** the housing (22) is closed by a cover (25) into which a belt guide (26) is integrated.

8. Vehicle seat according to claim 6 or 7,
**characterised in that** the location region (19) of the mounting support (4) is visually covered by trim (31) in the installed position of the belt store (20).

9. Vehicle seat according to claim 8,
**characterised in that** the trim (31) includes a belt feeder (32).

10. Vehicle seat according to any of claims 1 to 9,
**characterised in that** reinforcements (13) are fitted along the frame legs (10) forming the tubular frame (3).

11. Vehicle seat according to claim 10,
**characterised in that** the reinforcements (13) are composed of several sections (13a, 13b, 13c).

12. Vehicle seat according to claim 11,
**characterised in that** the lower end of at least one section (13a) is provided with a stop (28) acting together with an upper edge (29) of the next section (13b).

## Revendications

1. Siège de véhicule qui comporte un coussin de siège et un dossier de siège (1) dans lequel est fixée une plaque (2) à un cadre en tube (3) en forme de U, au moins un segment de plaque (9) de ladite plaque dépassant du cadre en tube, un support rapporté (4) destiné à l'appui de la tête étant fixé sur le segment de plaque en saillie, **caractérisé en ce qu'**un dispositif de ceinture de sécurité avec son mécanisme de réserve (20) pour ceinture de sécurité est intégré dans le siège de véhicule, le mécanisme de réserve (20) pour ceinture de sécurité étant monté dans le support rapporté (4).

2. Siège de véhicule selon la revendication 1, **caractérisé en ce que** le support rapporté (4) est relié au cadre en tube (3) par un cadre auxiliaire (5).

3. Siège de véhicule selon l'une quelconque des revendications 1 ou 2**, caractérisé en ce que** le mécanisme de réserve (20) pour ceinture de sécurité est disposé dans l'une des zones d'arêtes supérieures du dossier du siège (1).

4. Siège de véhicule selon l'une quelconque des revendications 1 ou 3, **caractérisé en ce que** le support rapporté (4) est conçu de façon symétrique par rapport à l'axe vertical moyen du siège de véhicule.

5. Siège de véhicule selon l'une quelconque des revendications 1 ou 4, **caractérisé en ce que** le support rapporté (4) présente respectivement sur chacun de ses côtés longitudinaux une zone réceptrice (19).

6. Siège de véhicule selon l'une quelconque des revendications 1 ou 3**, caractérisé en ce que** le mécanisme de réserve (20) pour ceinture de sécurité comprend un boîtier (22) qui est fixé au support rapporté (4).

7. Siège de véhicule selon la revendication 6, **caractérisé en ce que** le boîtier (22) est fermé par un couvercle (25) dans lequel est intégré un système de guidage de ceinture (26).

8. Siège de véhicule selon l'une quelconque des revendications 6 ou 7, **caractérisé en ce qu'**en position de montage du mécanisme de réserve (20) pour ceinture de sécurité, la zone réceptrice (19) du support rapporté (4) est recouverte, du côté visible, par un revêtement (31).

9. Siège de véhicule selon la revendication 8, **caractérisée en ce que** le revêtement comprend un moyen d'amenée de ceinture (32).

10. Siège de véhicule selon l'une quelconque des revendications 1 ou 10, **caractérisé en ce que** le long du cadre en tube (3) sont fixés des renforts (13) formant des branches de cadre (10).

11. Siège de véhicule selon la revendication 10, **caractérisée en ce que** les renforts (13) se composent de plusieurs parties constituées de segments (13a, 13b, 13c).

12. Siège de véhicule selon la revendication 11, **caractérisé en ce qu'**au moins un segment (13a) présente à son extrémité inférieure une butée (28) qui coopère avec un bord supérieur (29) du segment suivant (13b).
